# EUROPÄISCHE PATENTSCHRIFT

(11) **EP 0 729 607 B1**
(45) Veröffentlichungstag und Bekanntmachung des Hinweises auf die Patenterteilung: **28.05.1997**
(21) Anmeldenummer: 95900614.9
(22) Anmeldetag: 10.11.1994
(51) Int. Cl.: G06F 9/44

(54) **VERGLEICHSVERFAHREN FÜR STEUERPROGRAMM-QUELLCODE**
COMPARISON PROCEDURE FOR A CONTROL PROGRAMME IN SOURCE-CODE FORM
PROCEDE COMPARATIF POUR PROGRAMME DE GESTION ECRIT EN LANGAGE SOURCE

(30) Priorität: 15.11.1993 DE 4338988
(43) Veröffentlichungstag der Anmeldung: 04.09.1996
(73) Patentinhaber: SIEMENS AKTIENGESELLSCHAFT, 80333 München (DE)
(72) Erfinder: LANGE, Eberhard, D-90587 Obermichelbach (DE); LENGTAT, Gerhard, D-91052 Erlangen (DE); MAIER, Rupert, D-91330 Eggolsheim (DE); KLEYER, Dieter, D-91074 Herzogenaurach (DE)
(86) Internationale Anmeldenummer: DE9401327
(87) Internationale Veröffentlichungsnummer: WO9514270

(56) Entgegenhaltungen:
- EP-A- 0 323 707
- US-A- 3 711 863
- PROCEEDINGS OF THE CONFERENCE ON SOFTWARE MAINTENANCE - 1988, Oktober 1988, PHOENIX, AZ, US Seiten 348 - 350 M. FRAME 'A Lexical Comparison Program to Simplify the Maintenance of Portable Software'
- SOFTWARE PRACTICE AND EXPERIENCE, Bd.21, Nr.7, Juli 1991, CHICHESTER, SUSSEX, GB Seiten 739 - 755 WUU YANG 'Identifying Syntactic Differences Between Two Programs'

## Beschreibung

Die Erfindung bezieht sich auf ein Testverfahren ür ein im Quellcode vorliegendes Steuerprogramm für ein Prozeßleitsystem zur Ausführung auf einem Rechner.

Häufig wird bei der Durchführung von größeren Anlagenprojekten die Software einer großtechnischen Anlage und die Anlage selbst parallel entwickelt bzw. gebaut.

Das üblicherweise über automatisierte Entwicklungsmethoden entwickelte Steuerprogramm wird nach Fertigstellung der Anlage auf dieser implementiert. In der Regel kommt es dabei zu spezifischen Anpassungen, die sich z.B. aus den örtlichen Gegebenheiten der Anlage oder der Korrektur von Programmierfehlern ergeben.

Diese Vorgehensweise hat zur Folge, daß das vor Ort installierte Steuerprogramm Abweichungen gegenüber dem ursprünglich spezifizierten und automatisiert erstellten Steuerprogramm aufweist. Weil in solchen Fällen vielfach auch die Dokumentation für das Prozeßsteuerprogramm parallel zu dessen Entwicklung automatisch erstellt wird, ergeben sich folglich auch Abweichungen in der Dokumentation.

Aus dieser Vorgehensweise entsteht der Wunsch, automatisiert erstellte und nachbearbeitete (inbetriebgenommene) Steuerprogramme in ihrer Funktionsweise vergleichen zu können. Da es sich bei solchen Großanlagen beispielsweise um chemische Fertigungsanlagen, oder um Kraftwerke handeln kann, sind die Sicherheitsanforderungen entsprechend hoch und es ist nicht zulässig und auch nicht wünschenswert, daß die Dokumentation nicht exakt auf das betriebene Steuerprogramm abgestimmt ist. Aus denselben Gründen ist es evident, daß Fehler, die sich bei der Nachbearbeitung des Steuerprogrammes eingeschlichen haben, aufgefunden werden.

Das Dokument EP-A-0 323 707 beschreibt ein Testverfahren für ein im Quellcode vorliegendes Steuerprogramm für ein Prozeßleitsystem zur Ausführung auf einem Rechner, bei dem das Steuerprogramm maschinell auf einem Rechner mit einem Referenzprogramm verglichen wird, und Unterschiede, welche sich beim Vergleich ergeben, angezeigt werden.

Erschwert wird ein solcher Vergleich dadurch, daß es vielfach in den Sprachen, womit solche Steuerprogramme für Anlagenprozesse abgefaßt werden, möglich ist, ein und dieselbe Funktionalität auf unterschiedliche Weisen zu erreichen.

Grundlagen für solche Sprachen sind beispielsweise in "Hans Berger: Automatisieren mit SIMATIC S5-135U (ISBN 3-8009-1522-7)" angegeben. Aus den angeführten Gründen ist es wichtig, daß man die Steuerprogrammversion vor Ort mit der spezifizierten Version des Steuerprogrammes vergleichen kann. Es ist jedoch nicht wünschenswert, daß die durch Sprachkonstrukte auftretenden Unterschiede in den programmtechnischen Realisierungen, welche jedoch keine funktionalen Unterschiede bedeuten, als Fehler angezeigt werden. Ebensowenig soll die Reihenfolge, nach der einzelne voneinander unabhängige Anlagenfunktionen im Programm abgearbeitet werden, bei der Angabe von Programmunterschieden eine Rolle spielen.

Aufgabe der Erfindung ist deshalb ein Testverfahren für ein im Quellcode vorliegendes Steuerprogramm zur Ausführung auf einem Rechner anzugeben, mit dem ein Steuerprogramm und ein Referenzsteuerprogramm auf lediglich funktionaler Basis vergleichbar sind.

Diese Aufgabe wird gemäß den Merkmalen des Patentanspruchs 1 gelöst.

Weiterbildungen der Erfindung ergeben sich aus den Unteransprüchen.

Ein besonderer Vorteil des erfindungsgemäßen Verfahrens besteht darin, daß zunächst die einzelnen Anweisungen des Programmes gemäß ihrer funktionalen Zusammengehörigkeit in Funktionsblöcken zusammengefaßt werden. Anschließend werden sie gemäß der darin enthaltenen Operanden umsortiert, damit wird erreicht, daß eine unterschiedliche Reihenfolge von Befehlssequenzen nicht notwendigerweise zu einer Angabe von funktionalen Unterschieden durch das erfindungsgemäße Verfahren führt.

Die Überführung der einzelnen Anweisungen des Steuerprogrammes in ein neutrales vom Prozeßleitsystem unabhängiges Befehlsformat hat den Vorteil, daß lediglich funktionale und keine realisierungstechnischen Aspekte des Steuerprogrammes beim anschließenden Vergleich eine Rolle spielen.

Durch den Vergleich des Steuerprogrammes mit einem Referenzsteuerprogramm, welches im selben Darstellungsformat vorliegt, wird sichergestellt, daß lediglich funktionale Unterschiede als Ergebnis des erfindungsgemäßen Verfahrens angegeben werden, weil zum einen dasselbe Darstellungsformat vorliegt und durch die Anwendung von Sortierregeln erreicht wird, daß die Reihenfolge der einzelnen Funktionsblöcke bei identischen Funktionen dieselbe sein muß.

Ein weiterer Vorteil des erfindungsgemäßen Verfahrens besteht darin, daß diese angezeigten Unterschiede leicht für eine Veränderung der Dokumentationsunterlagen herangezogen werden können.

Ein zusätzlicher Vorteil des erfindungsgemäßen Verfahrens besteht weiterhin darin, daß die einzelnen Funktionsblöcke unabhängig von ihrer Stellung im Programm in eine normierte Reihenfolge gebracht werden.

Ein weiterer Vorteil des erfindungsgemäßen Verfahrens besteht darin, daß es Mehrfachzuweisungen auflöst, um den Vergleich von auch unterschiedlichsten Steuerprogrammrealisierungen durchführen zu können.

Das erfindungsgemäße Verfahren sieht eine Klassifizierung für einzelne Operanden eines Funktionsblockes vor, da so sichergestellt werden kann, daß entsprechend der Klassifizierung eine Sonderbehandlung für einzelne Funktionsblöcke durchgeführt werden kann. Beispielsweise kann so sichergestellt werden, daß aufeinander aufbauende Programmzeilen nicht umsortiert werden und ihre ursprüngliche Position behalten.

Weiterhin stellt das erfindungsgemäße Verfahren vorteilhaft sicher, daß die Befehle innerhalb eines Funktionsblockes immer in einer gleichen normierten Reihenfolge, auch bei unterschiedlichsten Steuerprogrammrealisierungen umsortiert werden.

Weiterhin sieht das erfindungsgemäße Verfahren es vor, daß Verweise auf Datenbereiche entfernt werden und direkt den Befehlsseiten, in denen die Datenbereiche (Datenbaustein) verwendet werden, zugewiesen werden, da das Programm so übersichtlicher und auch leichter vergleichbar wird. Aus demselben Grund werden günstigerweise alle Konstanten eines Typs in eine einheitliche Maßeinheit umgerechnet.

Besonders günstig ist es die einzelnen binären Befehle des Steuerprogrammes in die distributive Normalform umzurechnen, da es sich dabei um ein neutrales mathematisches Format handelt, das als solches eindeutig und leicht vergleichbar ist.

Es ist von Vorteil, die umsortierten Programme Block für Block vom Beginn an zu vergleichen, da sich durch die normierte Sortierweise eine eindeutige Abfolge von Funktionsblöcken und Befehlen innerhalb der Funktionsblöcke ergibt und damit durch das erfindungsgemäße Verfahren sichergestellt ist, daß Unterschiede leicht gefunden werden können.

Im folgenden wird die Erfindung anhand von Figuren weiter erläutert.

Diese Figuren beziehen sich auf ein Beispiel eines in STEP5-Sprache verfaßten Steuerprogrammes. Jedoch ist das erfindungsgemäße Verfahren auch auf beliebige andere Steuerprogrammsprachen anwendbar. Im einzelnen zeigen:
- Fig. 1: ein Steuerprogramm und ein nach dem erfindungsgemäßen Verfahren normiertes Steuerprogramm
- Fig. 2: die Bildung von Funktionsblöcken aus Anweisungen des Steuerprogrammes
- Fig. 3: den Austausch der Funktionsblöcke des Steuerprogrammes nach dem erfindungsgemäßen Verfahren
- Fig. 4: den Sortiervorgang der einzelnen Anweisungen innerhalb der Funktionsblöcke des Steuerprogrammes nach dem erfindungsgemäßen Verfahren
- Fig. 5: die Bildung der distributiven Normalform aus den Funktionsblöcken des Steuerprogrammes
- Fig. 6: zeigt ein Beispiel wie zwei Funktionsbausteine aus unterschiedlichen Steuerprogrammen verglichen werden
- Fig. 7: zeigt ein Beispiel des Ablaufs der Normalisierung.

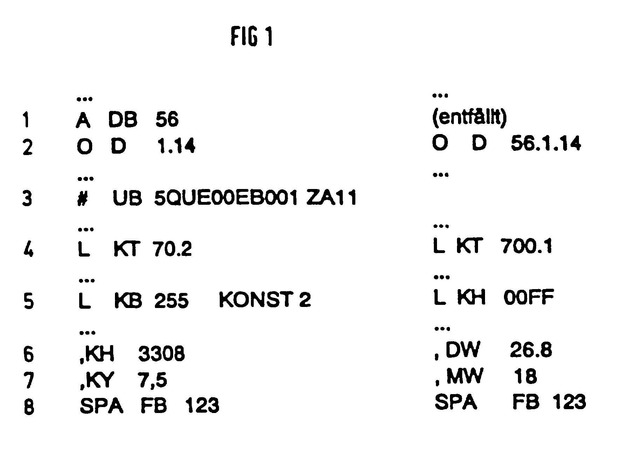

In Fig. 1 wird dargestellt, wie beispielsweise nach dem erfindungsgemäßen Verfahren ein Steuerprogramm normalisiert werden kann. Hierzu werden beispielhaft einzelne Regeln erläutert, nach denen ein Steuerprogramm normalisiert werden kann.

In Fig. 1, wie auch in den nachfolgend besprochenen Figuren ist auf der linken Seite der Original-Quellcode des Steuerprogrammes und auf der rechten Seite, der durch das erfindungsgemäße Verfahren veränderte Quellcode dargestellt.

Wie erkannt werden kann, entfällt der in Anweisung 1 enthaltene Datenbausteinaufruf DB 56 und es wird anstatt dessen das Datenwort direkt adressiert, wie man das in Zeile 2 erkennen kann. Zur schnelleren Bearbeitung werden beispielsweise Kommentare durch das erfindungsgemäße Verfahren entfernt. Die Quellcodezeilen 4 und 5, welche Konstanten enthalten, werden durch das erfindungsgemäße Verfahren verändert. Hierzu wird beispielsweise die Zeitkonstante in Zeile 4 KT70.2 in Millisekunden als einheitliche Maßeinheit für Zeitkonstanten dargestellt. Die dezimale Konstante KB 255 in Zeile 5 wird durch das erfindungsgemäße Verfahren im Hexadezimalcode dargestellt (der Kommentar KONST 2 entfällt). In den Zeilen 6, 7 und 8 des Quellcodes des Steuerprogrammes werden verschiedene Konstanten KH, KY und ein Bausteinaufruf eines Funktionsbausteines FB 123 analysiert und die daran anschließenden Übergabevariablen werden beispielsweise durch das erfindungsgemäße Verfahren so dargestellt, daß sie als direkt adressierbare Datenworte zur Verfügung stehen.

Diese beispielhafte Vorgehensweise des erfindungsgemäßen Verfahrens stellt eine erste Phase zur Normalisierung des Quellcodes dar, der bei einem Vergleich leichter bearbeitbar ist.

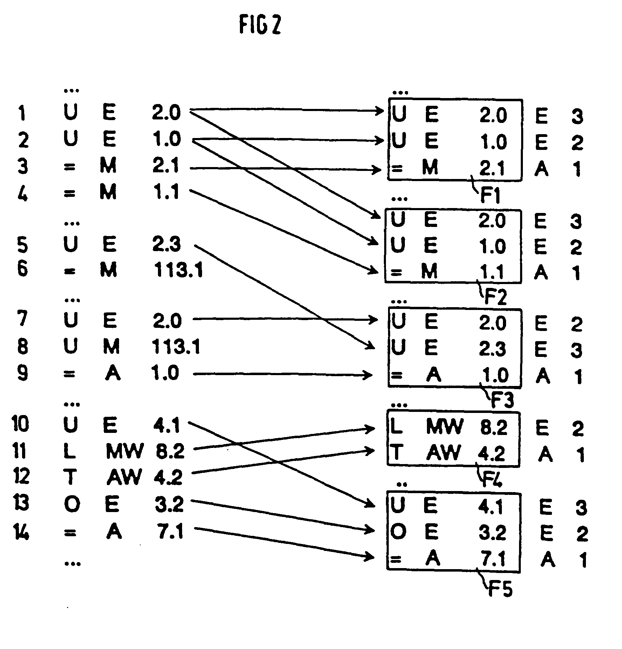

Fig. 2 zeigt, wie ein solcher normalisierter Quellcode in Funktionsblöcke überführt wird. In der linken Spalte ist der beispielsweise nach dem Verfahren, welches in Fig. 1 veranschaulicht wurde, behandelte Quellcode dargestellt. Die rechte Spalte zeigt diesen Quellcode, der nach dem erfindungsgemäßen Verfahren in Funktionsblöcke unterteilt wurde.

Die Abhängigkeiten beim Übergang zu Funktionsblöcken werden hier durch Pfeile veranschaulicht. In Fig. 2 ist in den Zeilen 1 bis 4 des Quellcodes eine Doppelzuweisung eines Operations-Ergebnisses an zwei Merker dargestellt.
Nach einer Regel des erfindungsgemäßen Verfahrens sollen solche Mehrfachzuweisungen in dem zu vergleichendem Code nicht mehr enthalten sein. D. h., es werden beispielsweise nach dem erfindungsgemäßen Verfahren zwei identische Funktionsblöcke F1 und F2 generiert, wobei F1 einem Merker M2.1 das eine Ergebnis zuweist und F2 dem anderen Merker M1.1 dieses identische Ergebnis zuweist.

Im folgenden wird der Quellcode der Zeilen 5 bis 9 verarbeitet und zwar wird hier, wie man erkennen kann, der Merker in Zeile 6 nicht verwendet, sondern es wird anstatt dessen im Funktionsblock F3 in Zeile 8 direkt der Quellcode aus Zeile 5 eingetragen, welcher dann zusammen mit den anderen Anweisungen im Funktionsblock F3 zum unveränderten Ergebnis Al führt (Hilfsmerker werden entfernt!).

Weiterhin wird beispielsweise nach dem erfindungsgemäßen Verfahren das Laden und Transferieren von binären Befehlen getrennt in einem separaten Funktionsblock abgebildet. Dies erkennt man in den Programmzeilen 10 bis 14 von Fig. 2, wobei die Zeilen 11 und 12 hier den Lade- und den Transferiere-Befehl zeigen, welcher im Funktionsblock F4 ausgelagert wird. Es bleibt dann der funktional zusammenhängende Funktionsblock F5, welcher die Zeilen 10, 13 und 14 enthält. Auf der rechten Seite neben den Funktionsblöcken F1 bis F5 ist jeweils niedergeschrieben, ob ein Ein- oder Ausgangsoperand vorliegt; weiterhin werden hier beispielsweise die Operanden einzelner Funktionsblöcke entsprechend einer Vorschrift durchnummeriert, die später zum Sortieren der Befehle und Funktionsblöcke herangezogen wird.

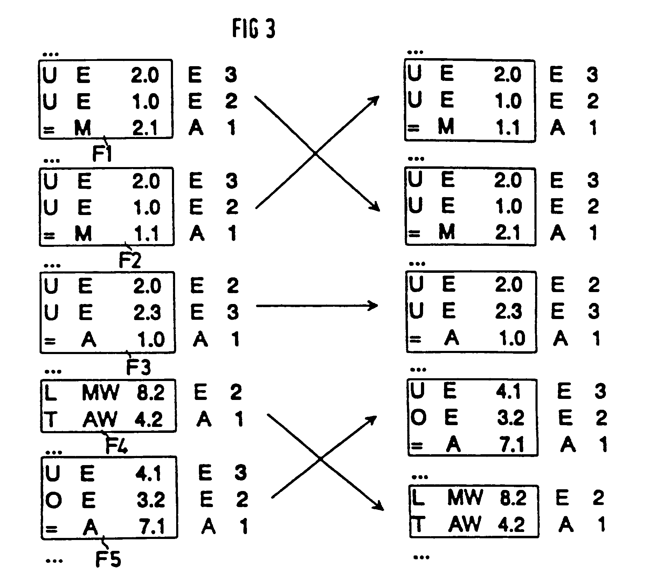

Fig. 3 zeigt, wie nach dem erfindungsgemäßen Verfahren beispielsweise Funktionsblöcke, welche im normalisierten STEP5-Code dargestellt sind, sortiert werden können.

In der linken Spalte von Fig. 3 sind die Funktionsblöcke in ihrer Anordnung so dargestellt, wie sie sich aus Fig. 2 ergeben. Nach einer Regel des erfindungsgemäßen Verfahrens werden beispielsweise Funktionsblöcke nach den ihnen zugewiesenen Sortierungsnummern in aufsteigender Reihenfolge sortiert. Dies hat zur Folge, daß die Position des Funktionsblocks F2, welcher den Merker M1.1 enthält und die Position des Funktionsblockes F1, welcher den Merker M2.1 enthält, vertauscht werden müssen. Der Übergang wird durch Pfeile veranschaulicht und das Ergebnis ist in der rechten Spalte von Fig. 3 dargestellt. Anschließend wird die Lade- und Transferiere Operation in F4 nach einer weiteren Sortierregel des erfindungsgemäßen Verfahrens hinter den Funktionsblock F5 gestellt.

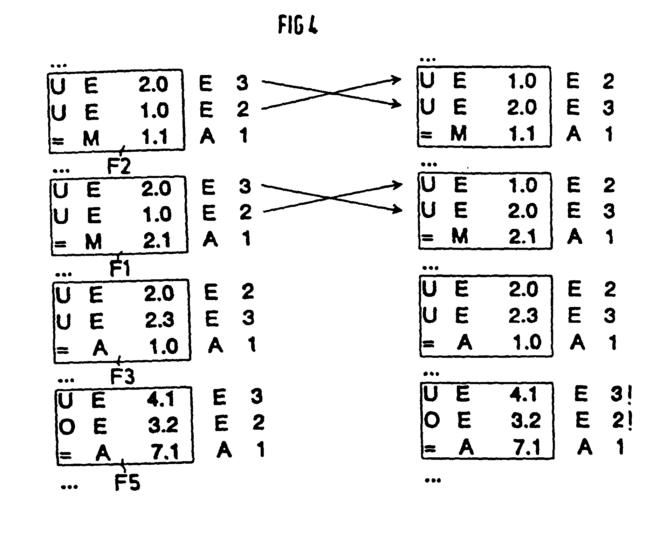

Fig. 4 veranschaulicht, wie nach einer weiteren Regel des erfindungsgemäßen Verfahrens die einzelnen Anweisungen innerhalb der Funktionsblöcke vertauscht werden können. Die Funktionsblöcke F1, F2, F3 und F5 sind in derselben Reihenfolge angeordnet, wie sie sich nach dem Vertauschen, welches in Fig. 3 erläutert wurde, ergibt.

In den Funktionsblöcken F1 und F2 werden die ersten zwei Anweisungszeilen vertauscht, damit sich danach, wie es eine weitere Regel des erfindungsgemäßen Verfahrens vorsieht, die Ergebnisse E2 und E3 in der richtigen Reihenfolge (nach Operandentyp und aufsteigenden Nummern) sortiert, befinden.

Die Befehle im Funktionsblock F3 verbleiben in ihrer Reihenfolge, da sie schon richtig sortiert sind. Die Anweisungen im Funktionsblock F5 werden nicht umsortiert, obwohl sich die Ergebnisse nach der Sortierregel des erfindungsgemäßen Verfahrens in der falschen Reihenfolge befinden, da ein Vertauschen einer logischen Und- und einer Oder-Operation (U, O) einen funktionellen Unterschied darstellen würden.

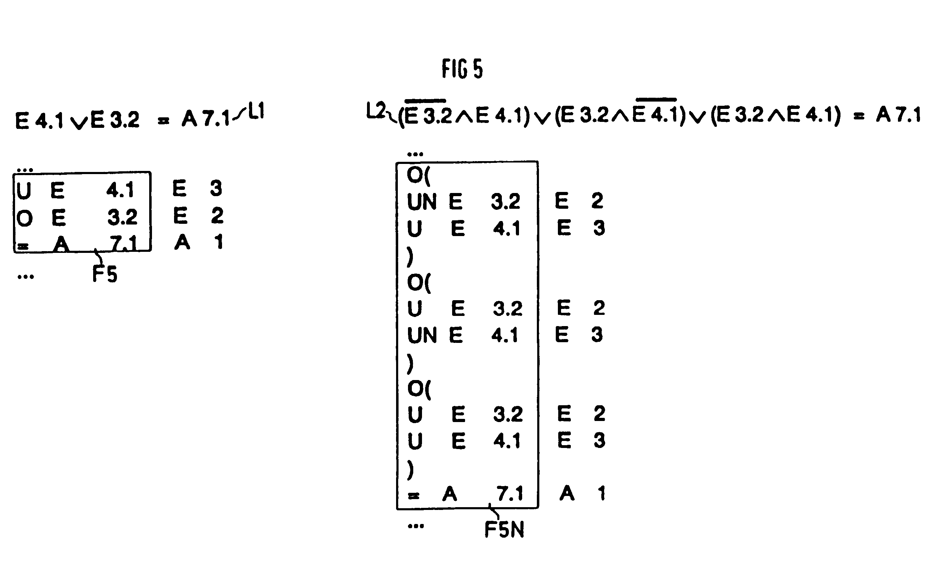

In Fig. 5 wird veranschaulicht, wie die Funktionen in einem Funktionsblock in die distributive Normalform überführt werden. Hierzu ist der Funktionsblock F5, welcher aus den vergangenen Figurenbeschreibungen bekannt ist, in seiner logischen Darstellungsform L1 dargestellt. Diese logische Darstellungsform wird nach dem erfindungsgemäßen Verfahren in die distributive Normalform L2 überführt. Aus dieser distributiven Normalform läßt sich dann wieder ein neuer Funktionsblock F5N ableiten. Ein Vergleich, wie ihn das erfindungsgemäße Verfahren vorsieht, kann nur mit solchen Funktionsblöcken durchgeführt werden, welche in eine Normalform (z.B. distributive Normalform) übergeführt worden sind.
Nach Durchführung all der Schritte, welche im erfindungsgemäßen Verfahren vorgesehen sind, erhält man also ein normalisiertes Quellprogramm, dessen Funktionsblöcke beispielsweise in distributiver Normalform dargestellt und umsortiert sind.

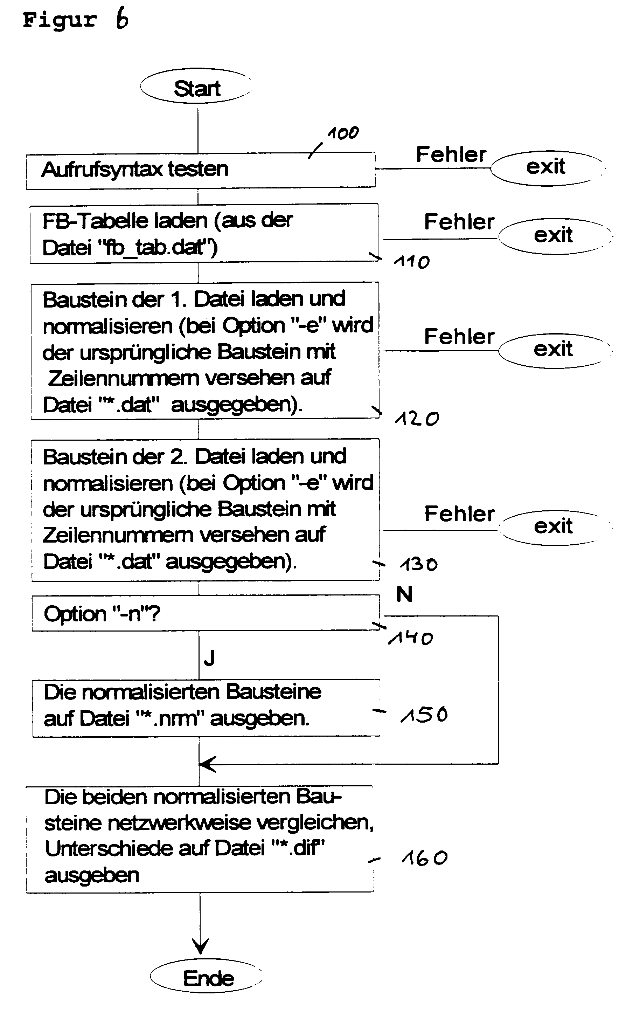

Figur 6 zeigt als Beispiel wie zwei Funktionsbausteine aus zwei Programmen, die dort an unterschiedlicher Stelle vorhanden sind, miteinander verglichen werden können. Zu Beginn wird in Schritt 100 die Aufrufsyntax getestet und falls ein Fehler vorliegt, aus dem Programm herausverzweigt und eine Fehlermeldung ausgegeben. In Schritt 110 des erfindungsgemäßen Verfahrens wird eine FB-Tabelle geladen, in der z.B. die Übergabe-Parameter der einzelnen Funktionsbausteine enthalten sind, sodaß vom System eine funktionale Zuordnung der Funktionsbausteine zueinander anhand dieser Ubergabeparameter erfolgen kann.

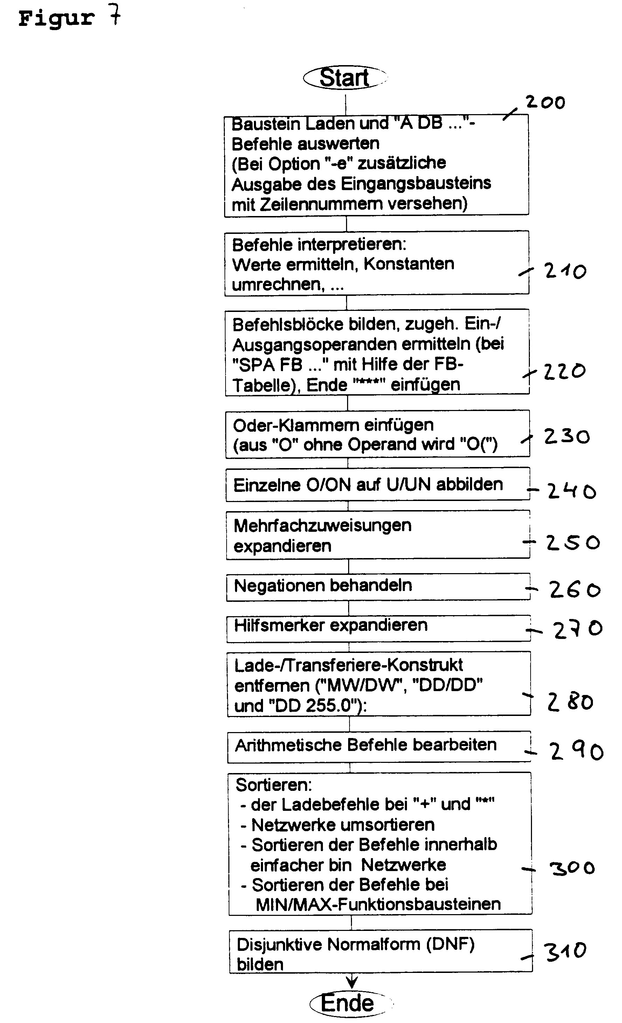

Bei den Funktionsbausteinen handelt es sich um spezielle Konstrukte aus dem STEP 5 Programm, mit dem verschiedene Befehle zusammengefaßt werden können, um eine komplexe Funktion auf einen oder mehrere Eingabeparameter anwenden zu können. In Schritt 120 des erfindungsgemäßen Verfahrens wird zunächst der erste Funktionsbaustein, der verglichen werden soll, geladen und normalisiert. Wie normalisiert wird, ist in Figur 7 beschrieben. Falls ein Fehler auftritt, wird aus dem Programm heraus verzweigt und eine Fehlermeldung ausgegeben. Falls die Option "-e" angegeben wird, wird der ursprüngliche Baustein beispielsweise mit Zeilennummern versehen. In Schritt 130 wird der Baustein aus der zweiten Datei geladen und entsprechend normalisiert. Es wird dabei genauso vorgegangen, wie beim Baustein der ersten Datei. Es ist zu bemerken, daß diese beiden Funktionsbausteine nicht an derselben Stelle in den einzelnen Dateien vorhanden sein müssen, sondern daß sie aufgrund der Übergabeparameter gesucht werden können. In Schritt 140 wird eine Option -n abgefragt, mit der die Ausgabe der normalisierten Bausteine im unverglichenen Zustand unterdrückt werden kann. Schritt 150 bewirkt beispielsweise die Ausgabe der normalisierten Bausteine auf eine Datei. In Schritt 160 werden die beiden Funktionsbausteine entsprechend dem erfindungsgemäßen Verfahren verglichen und beispielsweise die Unterschiede in einer Datei .dif ausgegeben.

Figur 7 zeigt ein Beispiel zur Normalisierung von zu testenden Programmen nach dem erfindungsgemäßen Verfahren. In Schritt 200 wird der zu testende Baustein bzw. das Programmodul geladen und seine Befehle werden ausgewertet. Beispielsweise kann mit einer Option "-e" die Ausgabe des Eingangsbausteins mit Zeilennummern bewirkt werden. In Schritt 210 werden Befehle interpretiert, Werte ermittelt und die Konstanten umgerechnet. Beispiele hierfür sind in den vorangegangen Figuren angegeben. Im Schritt 220 des erfindungsgemäßen Verfahrens werden beispielsweise Funktionsblöcke gebildet und zwar, wie zuvor in den anderen Figuren beschrieben, anhand der Ein- und Ausgangsoperanden der einzelnen Befehle.

In Schritt 230 werden Oder-Klammern eingefügt für solche logischen Oder-Operationen, die keinen Operanden enthalten. Beispielsweise werden zwei Und-Operationen, die auf eine Oder-Operation folgen mit Hilfe dieser Klammer in der Oder-Operation zusammengefaßt.

Im Schritt 240 des erfindungsgemäßen Verfahrens werden beispielsweise einzelne Oder bzw. Nichtoder-Operationen auf Und- und Nichtund-Operationen abgebildet. Im Schritt 250 des erfindungsgemäßen Verfahrens werden beispielsweise Mehrfachzuweisungen expandiert. Die Beispiele dafür werden hier im einzelnen nicht erläutert, weil hierzu in den vorangegangenen Figurenbeschreibungen Beispiele angegeben wurden. Im Schritt 260 des erfindungsgemäßen Verfahrens werden Negationen behandelt. Im Schritt 270 des erfindungsgemäßen Verfahrens werden die Hilfsmerker expandiert. Hilfsmerker sind Merker, denen innerhalb eines Funktionsblockes, durch eine binäre Operation ein Wert zugewiesen wird, um diese anschließend für andere Operationen verfügbar zu machen.
In ihnen werden also binäre Zwischenergebnisse abgelegt, die weiter unten im gleichen Baustein weiter verwendet werden. Das erfindungsgemäße Verfahren sieht vor, diese Hilfsmerker zu entfernen und stattdessen direkt an den Stellen, an welchen die Hilfsmerker verwendet wurden, die Befehle zu setzen, aus denen der Inhalt des Hilfsmerkers entstand. Um auch Hilfsmerker, die zu einem späteren Zeitpunkt negiert verwendet werden, expandieren zu können, werden die bisher beispielsweise im STEP 5 Befehlsvorrat enthaltenen Befehle UN, sowie ON eingeführt. In der Regel werden diese Befehle bei der anschließend so durchgeführten Bildung der disjunktiven Normalform wieder entfernt.

Im Schritt 280 des erfindungsgemäßen Verfahrens werden beispielsweise Lade-/Transferiere-Konstrukte entfernt. Dafür geben die vorangegangenen Figurenbeschreibungen Beispiele an. Im Schritt 290 folgt die Bearbeitung der arithmetischen Befehle in dem untersuchten Funktionsblock. Im Schritt 300 folgt der Sortiervorgang des erfindungsgemäßen Verfahrens. Dabei wird beispielsweise nach folgender Reihenfolge vorgegangen. Zunächst werden die Ladebefehle nach "+" und "*" sortiert. Anschließend folgt das Umsortieren der einzelnen Funktionsblöcke und im folgenden das Sortieren der Befehle innerhalb dieser einzelnen Funktionsblöcke. Schließlich werden die Befehle der Funktionsblöcke, welche MIN/MAX-Funktionsbausteine enthalten, umsortiert. Da diese Vorgehensweise einheitlich auf alle zu vergleichenden Programmodule angewendet wird, erhält man am Schluß bei gleicher Funktionsweise, Programme, die identisch durchsortiert sind. Dabei ist es nicht wichtig, daß die Reihenfolge so eingehalten wird, wie hier vorgegeben wurde, sondern lediglich zu beachten ist, daß eine Regel befolgt wird, die sicherstellt, daß in zwei zu vergleichenden Programmen mit derselben Funktion, die Anweisungen in derselben Reihenfolge einsortiert werden. In Schritt 310 wird die disjunktive Normalform gebildet. Die Bildung der disjunktiven Normalform erfolgt beispielsweise lediglich für rein binäre Funktionsblöcke, die unterschiedliche binäre Verknüpfungsbefehle besitzen (U, UN, O, ON, ...). Dabei können beispielsweise auch verschachtelte Klammerausdrücke interpretiert und Akkumulatorvergleiche behandelt werden. Für alle anderen Funktionsblöcke wird beispielsweise die disjunktive Normalform nicht gebildet. Der Vergleich der einzelnen Funktionsblöcke nach dem erfindungsgemäßen Verfahren erfolgt im Anschluß Block für Block.

Nach Durchführung all der Schritte, welche im erfindungsgemäßen Verfahren vorgesehen sind, erhält man also ein normalisiertes Quellprogramm, dessen Funktionsblöcke beispielsweise in distributiver Normalform dargestellt und umsortiert sind. Das Referenzprogramm muß nun, da dies durch das erfindungsgemäße Verfahren sichergestellt ist, bei gleicher Funktionsweise die Funktionsblöcke in der gleichen Reihenfolge enthalten und auch die einzelnen Anweisungen innerhalb der Funktionsblöcke in der selben Folge enthalten. Bei einem Vergleich dieser beiden Programmversionen Funktionsblock für Funktionsblock können nun leicht eventuelle Unterschiede festgestellt und angezeigt werden.

### Häufigste Abkürzungen

- Abkürzung: Bedeutung
- U: AND
- UN: AND NOT
- O: OR
- ON: OR NOT
- =: IS
- M: Merker O
- ***: Bausteinende O
- KH: Konstante in Hexadezimaldarstellung
- KY: Konstante in Dezimaldarstellung
- KT: Konstante für die Darstellung einer Zeit
- KB: Konstante in Binärdarstellung
- SPA: Absoluter Sprung
- L: Lade in den Akkumulator
- DB: Datenbaustein
- A: Mit DB ... Adressiere Datenbaustein Sonst Ausgang...
- MW: Merkerwort
- AW: Ausgangswort

## Patentansprüche

1. Testverfahren für ein im Quell-Code vorliegendes Steuerprogramm für ein Prozeßleitsystem zur Ausführung auf einem Rechner mit folgenden Merkmalen:
a) aus Anweisungen des Steuerprogrammes werden Funktionsblöcke gebildet, die so beschaffen sind, daß sie die jeweils zur Ausführung einer einzelnen arithmetischen, beziehungsweise binären Verknüpfung oder eines Bausteinaufrufes benötigten Anweisungen enthalten,
b) die Funktionsblöcke werden nach einer vorgegebenen Regel sortiert,
c) die Anweisungen werden in ein vom Prozessleitsystem unabhängiges Darstellungsformat überführt,
d) das Steuerprogramm wird maschinell auf einem Rechner mit einem Referenzprogrammm verglichen, welches auf dasselbe Darstellungsformat gebracht wird, und
e) Unterschiede, welche sich beim Vergleich ergeben, werden angezeigt und klassifiziert.

2. Verfahren nach Anspruch 1, bei dem die Unterschiede zwischen dem Referenzprogramm und dem Steuerprogramm zur automatischen Erzeugung einer neuen Steuerprogramm-Dokumentation aus der bestehenden Referenzprogramm-Dokumentation verwendet werden.

3. Verfahren nach einem der obigen Ansprüche, bei dem zwei innerhalb des Steuerprogrammes aufeinanderfolgende Funktionsblöcke nach einer ersten Regel daraufhin untersucht werden, ob eine Abhängigkeit zwischen ihren jeweiligen Ein- und Ausgaben vor und nach einer Vertauschung der beiden Funktionsblöcke im Programmablauf besteht, und falls dies nicht der Fall ist, die beiden Funktionsblöcke sortiert werden.

4. Verfahren nach einem der Ansprüche 1 bis 3, bei dem nach einer zweiten Regel ein Funktionsblock, welcher zwei Operanden ein identisches Ergebnis zuweist, verdoppelt wird, so daß jeder verbleibende Funktionsblock nur noch einem Operanden dieses Ergebnis zuweist.

5. Verfahren nach einem der obigen Ansprüche, bei dem einer oder mehrere Operanden eines Funktionsblockes als Sortierhilfe danach klassifiziert werden, ob sie entweder ein Eingang, Ein- und Ausgang, keines von Beidem sind, oder danach, ob über ihre Bestimmung keine Information vorliegt und bei dem ein Funktionsblock, welcher einen Operanden enthält, über dessen Bestimmung keine Information vorliegt, nicht umsortiert wird.

6. Verfahren nach einem der obigen Ansprüche, bei dem die Anweisungen innerhalb eines Funktionsblockes nach einer vorgegebenen Regel sortiert werden.

7. Verfahren nach Anspruch 6, bei dem der Quell-Code in STEP5-Sprache vorliegt und in folgender Reihenfolge sortiert wird:
Merker, Datenoperanden, Ausgänge, Eingänge, Timer, Zähler, kleine Nummern vor Großen, auch bei Datenbausteinen.

8. Verfahren nach Anspruch 7, bei dem eine Nummer eines Datenbausteins direkt dort hinterlegt wird, wo auf den Datenbaustein zugegriffen wird.

9. Verfahren nach einem der obigen Ansprüche, bei dem alle verwendeten Konstanten, je Konstantentyp in eine einheitliche Maßeinheit umgerechnet werden.

10. Verfahren nach einem der obigen Ansprüche, bei dem das Darstellungsformat für binäre Verknüpfungen die distributive Normalform ist.

11. Verfahren nach einem der obigen Ansprüche, bei dem der Vergleich des umsortierten Steuerprogrammes mit dem Referenzprogramm beginnend am Programmanfang Funktionsblock für Funktionsblock durchgeführt wird und das Vergleichergebnis klassifiziert wird nach
- Reihenfolgeunterschiede
- Codeunterschied
- DB-Unterschied
- Kommentarunterschied.

## Claims

1. Test procedure for a control program, for a process control system, in source-code form to be executed on a computer, having the following features:
a) statements of the control program are used to form functional blocks which are such that they contain the statements respectively required for the execution of an individual arithmetic or binary operation or a module call,
b) the functional blocks are sorted according to a predetermined rule,
c) the statements are converted into a representational format independent of the process control system,
d) the control program is machine-compared on a computer with a reference program which is brought to the same representational format, and
e) differences which arise in the comparison are indicated and classified.

2. Procedure according to Claim 1, in which the differences between the reference program and the control program are used for automatically generating new control program documentation from the existing reference program documentation.

3. Procedure according to one of the above claims, in which two successive functional blocks within the control program are investigated according to a first rule for whether a dependence exists between their respective inputs and outputs before and after a permutation of the two functional blocks in the sequence of program operations, and if this is not the case the two functional blocks are sorted.

4. Procedure according to one of Claims 1 to 3, in which, according to a second rule, a functional block which assigns an identical result to two operands is duplicated, so that each remaining functional block assigns this result only to one operand.

5. Procedure according to one of the above claims, in which, as a sorting aid, one or more operands of a functional block are classified according to whether they are either an input, input and output or neither of the two, or according to whether there is no information as to their purpose, and in which a functional block which contains an operand as to the purpose of which there is no information is not re-sorted.

6. Procedure according to one of the above claims, in which the statements within a functional block are sorted according to a predetermined rule.

7. Procedure according to claim 6, in which the source code is in the STEP5 language and is sorted in the following order:
flags, data operands, outputs, inputs, timers, counters, small numbers before large numbers, also in the case of data modules.

8. Procedure according to claim 7, in which a number of a data module is stored directly where the data module is accessed.

9. Procedure according to one of the above claims, in which all the constants used are converted according to the constant type into a standard dimensional unit.

10. Procedure according to one of the above claims, in which the representational format for binary operations is the distributive normal form.

11. Procedure according to one of the above claims, in which the comparison of the re-sorted control program with the reference program is carried out function block by function block, beginning at the start of the program, and the result of the comparison is classified according to
- differences in order
- difference in code
- difference in DB
- difference in comments

## Revendications

1. Procédé d'essai pour un programme de gestion existant en langage source pour un système de contrôle de process pour exécution sur un ordinateur avec les caractéristiques suivantes :
a) à partir des instructions du programme de gestion, on construit des blocs de fonctions qui sont conçus de telle façon qu'ils contiennent les instructions nécessaires chaque fois pour l'exécution d'une liaison individuelle arithmétique ou selon le cas binaire ou d'un appel de module,
b) les blocs de fonctions sont triés selon une règle prescrite,
c) les instructions sont converties dans un format de représentation indépendant du système de contrôle de process,
d) le programme de gestion est automatiquement comparé sur un ordinateur avec un programme de référence qui est amené au même format de représentation et
e) les différences qui résultent de la comparaison sont affichées et classées.

2. Procédé selon la revendication 1 dans lequel les différences entre le programme de référence et le programme de gestion sont utilisées pour la génération automatique d'une nouvelle documentation de programme de gestion à partir de la documentation du programme de référence existante.

3. Procédé selon l'une des revendications précédentes dans lequel deux blocs de fonctions se suivant à l'intérieur du programme de gestion sont étudiés d'après une première règle pour vérifier s'il existe une dépendance entre leurs entrées et leurs sorties avant et après un échange des deux blocs de fonctions dans le déroulement du programme et si cela n'est pas le cas, les deux blocs de fonctions sont triés.

4. Procédé selon l'une des revendications 1 à 3 dans lequel d'après une deuxième règle un bloc de fonctions qui assigne un résultat identique à deux opérandes est dédoublé de sorte que chaque bloc de fonctions restant n'assigne plus ce résultat qu'à un opérande.

5. Procédé selon l'une des revendications précédentes dans lequel un ou plusieurs opérandes d'un bloc de fonctions sont classés comme auxiliaires de tri selon qu'ils sont soit une entrée, une entrée et sortie, soit aucune des deux, ou selon qu'aucune information n'existe quant à leur détermination, et dans lequel un bloc de fonctions qui contient un opérande pour la détermination duquel aucune information n'existe, n'est pas trié.

6. Procédé selon l'une des revendications précédentes dans lequel les instructions à l'intérieur d'un bloc de fonctions sont triées selon une règle prescrite.

7. Procédé selon la revendication 6 dans lequel le langage source se présente en langage STEP 5 et est trié dans l'ordre suivant :
marqueur, opérandes de données, sorties, entrées, minuterie, compteur, petits numéros avant les grands, également avec des modules de données.

8. Procédé selon la revendication 7 dans lequel un numéro d'un module de données est placé directement là où l'on accède sur le module de données.

9. Procédé selon l'une des revendications précédentes dans lequel toutes les constantes utilisées chacune par type de constante sont converties en une unité de mesure unitaire.

10. Procédé selon l'une des revendications précédentes dans lequel le format de représentation pour les liaisons binaires est la forme normale distributive.

11. Procédé selon l'une des revendications précédentes dans lequel la comparaison du programme de gestion trié avec le programme de référence est réalisée en commençant au début du programme, bloc de fonctions pour bloc de fonctions et le résultat de la comparaison est classé selon
- les différences dans la succession
- la différence de langage
- la différence DB
- la différence de commentaires.
